## Europäisches Patentamt
## European Patent Office
## Office européen des brevets

(11) Publication number: **0 050 962**
**B1**

(12) **EUROPEAN PATENT SPECIFICATION**

(45) Date of publication of patent specification: **27.12.84**

(21) Application number: **81304959.0**

(22) Date of filing: **22.10.81**

(51) Int. Cl.³: **B 65 G 15/34**

(54) **Conveyor belt.**

(30) Priority: **23.10.80 JP 147532/80**

(43) Date of publication of application:
**05.05.82 Bulletin 82/18**

(45) Publication of the grant of the patent:
**27.12.84 Bulletin 84/52**

(84) Designated Contracting States:
**DE FR GB IT**

(56) References cited:
**GB-A-1 228 226**
**US-A- 707 355**

(73) Proprietor: **BRIDGESTONE TIRE KABUSHIKI KAISHA**
**10-1, Kyobashi 1-Chome Chuo-Ku**
**Tokyo (JP)**

(72) Inventor: **Sumino, Shinichi**
**No. 1, Kashio-cho Totsuka-ku**
**Yokohama-shi Kanagawa-ken (JP)**
Inventor: **Fujita, Mamoru**
**No. 1, Kashio-cho Totsuka-ku**
**Yokohama-shi Kanagawa-ken (JP)**

(74) Representative: **Ranson, Arthur Terence et al**
**W.P. Thompson & Co. Coopers Building Church Street**
**Liverpool L1 3AB (GB)**

Courier Press, Leamington Spa, England.

## Description

The present invention relates to a conveyor belt, and more particularly to improvements in a conveyor belt suitable for use in a belt of a so-called cylindrical belt conveyor.

The cylindrical conveyor for transporting mainly powder-like or granular materials in which the belt of the conveyor is pinched from both sides by means of a plurality of pinching rollers so as to roll the belt into the cylindrical form in cross-section has advantages in that the materials to be transported by the conveyor belt are effectively prevented from scattering out of the conveyor belt and from getting wet by rain and water, while it can transport the materials effectively even though the transporting line is inclined.

Such a conveyor belt is required to possess a property permitting the belt to be quickly rolled into the cylindrical form by means of the pinching rollers, while it can be restored to the original flat form by removal of the pinching force.

However, as the diameter of the cylindrical form in cross-section of the belt increases, the thickness of the belt and, particularly, the thickness of the core layer thereof for reinforcing the strength of the belt necessarily increase, so that it is made difficult or impossible for the belt to be rolled into the cylindrical form by the action of the pinching rollers and to restore its original flat form by the removal of the pinching action of the pinching rollers, while, as described later, the overlapping end edge portions of the belt when it is rolled into the cylindrical form in cross-section will yield to the gravitational force acting thereon so as to collapse inwardly, thereby causing permanent deformation in the overlapping end edge portions of the belt which makes it difficult to supply the materials onto the belt after it is restored to its flat form and, in the extreme instance, the restoration of the belt to its flat form is made impossible.

The present invention aims at avoiding the above described disadvantages of the prior art conveyor belt.

It is an object of the present invention to provide a novel and useful conveyor belt which positively avoids the above described disadvantages of the prior art conveyor belt.

According to the present invention there is provided a flexible conveyor belt for rolling into cylindrical form in cross section by pinching rollers, comprising an upper cover layer, a lower cover layer and a reinforcing core layer embedded between said upper and lower cover layers, characterised in that said reinforcing core layer has a thickened central portion and a respective thinned portion on each side of the thickened central portion, which thinned portions extend to the edge of the belt so that each side of the belt has a lower bending resistance stiffness than the thickened portion of the belt, and that a respective stepped shoulder portion is formed between each of said thinned portions and the thickened central portion, the lower surface of said core portion being flat.

The upper and lower cover layers are resilient — preferably rubber.

With the belt constructed as described above, it is easily rolled into the cylindrical form by pinching the belt from both sides thereof by means of the pinching rollers, while the uniform surface pressure is maintained in the lower surface of the belt thereby reducing the wear and fatigue of the lower surface of the belt contacting with the guide pulleys.

The present invention will be more fully appreciated as the same becomes better understood from the following detailed description when considered in connection with the accompanying drawings in which like reference characters designate like or corresponding parts throughout the several views and wherein:

Fig. 1 is a cross-sectional view showing the conditions under which a prior art conveyor belt is operated and

Fig. 2 is a cross-sectional view showing an embodiment of the conveyor belt constructed in accordance with the present invention;

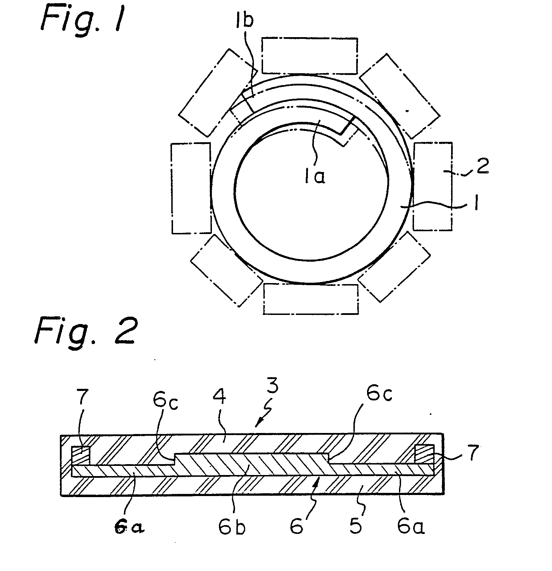

With reference to Fig. 1, the prior art conveyor belt 1 is shown rolled into the cylindrical form in cross-section by means of the pinching rollers 2 with the end edge portions 1a and 1b overlapping each other. As shown by the chain line in Fig. 1, the overlapping end edge portions 1a and 1b will yield to the gravitational force acting thereon so that they tend to collapse inwardly. Thus, a disadvantage of the prior art conveyor belt is that the overlapping end edge portions 1a and 1b are subjected to permanent deformation, so that it is made difficult to safely supply the materials onto the belt after it is restored to its flat form for the transport of the material or it is made impossible to restore the belt to its flat form.

Referring now to Fig. 2 showing an embodiment of the conveyor belt of the present invention, the belt 3 comprises an upper cover rubber layer 4, a lower cover rubber layer 5, a reinforcing core layer 6 embedded between the upper and lower cover rubber layers 4 and 5 and made of materials such as nylon canvas and steel cords and the like, and a pair of elongation-resisting reinforcing layers 7 embedded in the upper cover rubber layer 4 and abutting against or secured to the upper surfaces of the outer ends of the respective end edge portions 6a of the core layer 6.

The reinforcing core layer 6 is made of materials such as laminated nylon or polyester canvas or nylon or steel cords having a high tensile strength and a high modulus of elasticity. The end edge portions 6a of the core layer 6 are made thinner than the central portion 6b in order to -reduce resistance against bending widthwise of the belt 3, with the respective stepped shoulder portions between the thickened central portion 6b and the thinned side portions 6a being located on the upper side of the core layer 6 so as to maintain the lower surface thereof in the flat form thereby permitting the surface pressure generated by the guide pulleys supporting the belt 3 between the same and the pulleys to be kept uniform so that local fatigue or wear generated in the lower cover rubber layer 5 is kept to the minimum.

The elongation-resisting reinforcing layers 7 serve to maintain the elongation lengthwise of the respective end edge portions of the belt 3 to the minimum, thereby urging positively the outer overlapping end edge portion of the belt operated in the cylindrically rolled state against the inner overlapping end edge portion of the belt so that the outer overlapping end edge portion of the belt 3 is prevented from moving or stripping apart from the inner overlapping end edge portion of the belt 3, because the elongation lengthwise of the outer end edge portion of the belt 3 is limited to the minimum by virtue of the provision of the elongation-resisting reinforcing layers 7 even in the position intermediate the neighbouring pinching rollers located in spaced relationship lengthwise of the belt 3, i.e. in positions spaced a substantial distance between the pinching rollers arranged in the longitudinal direction of the belt 3, while the cross-sectional configuration of the belt 3 is kept exactly in the cylindrical form with the overlapping end edge portions thereof held in contact with each other.

With one feature of the conveyor belt constructed in accordance with the present invention, it can be easily rolled into the cylindrical form in cross-section by using the pinching rollers by virtue of the fact that the central portion of the reinforcing layer is made thicker in comparison with both side portions integral thereto. Further, since the lower surface of the core layer is made flat without any stepped shoulder portions, the uniform surface pressure is maintained over the lower surface of the belt contacting with the guide pulleys thereby reducing fatigue and wear in the lower surface of the belt. In case the elongation-resisting reinforcing layers are provided at the end portions of the core layer, the elongation of the end edges of the belt is positively limited to the minimum so that the exact cylindrical form in cross-section of the belt is maintained without causing stripping of the outer overlapping end edge portion of the belt from the inner overlapping end edge portion even at positions spaced apart from the position at which the belt is pinched by the pinching rollers, i.e. even at positions where the belt is not pinched by the pinching rollers.

Further, with the conveyor belt of the present invention which is provided with locally stiffened portions extending lengthwise of the belt, the collapsing of the belt rolled into the cylindrical form in cross-section is positively prevented, while permanent deformation at the collapsing portions of the belt is positively prevented from occurring.

## Claims

1. A flexible conveyor belt for rolling into cylindrical form in cross-section by pinching rollers, comprising an upper cover layer (4), a lower cover layer (5) and a reinforcing core layer (6) embedded between said upper and lower cover layers, characterised in that said reinforcing core layer (6) has a thickened central portion (6b) and a respective thinned portion (6a) on each side of the thickened central portion (6b), which thinned portions extend to the edge of the belt so that each side of the belt has a lower bending resistance stiffness than the thickened central portion of the belt, and that a respective stepped shoulder portion (6c) is formed between each of said thinned portions and the thickened central portion, the lower surface of said core layer being flat.

2. A conveyor belt as claimed in claim 1 further comprising a pair of elongation-resisting reinforcing layers (7), each located along the respective end edge of said core layer.

## Patentansprüche

1. Flexibles Förderband zum Rollen zu einer zylindrischen Form im Querschnitt durch Drückwalzen, welches eine obere Abdeckschicht (4), eine untere Abdeckschicht (5) und eine verstärkende Kernschicht (6) aufweist, die zwischen der oberen und unteren Abdeckschicht eingebettet ist, dadurch gekennzeichnet, daß die verstärkende Kernschicht (6) einen verdickten Mittelabschnitt (6b) und jeweils einen verdünnten Abschnitt (6a) auf jeder Seite des verdickten Mittelabschnitts (6b) aufweist, wobei die verdünnten Abschnitte sich zum Rand des Bandes erstrecken, so daß jede Seite des Bandes eine niedrigere Biegewiderstandssteifigkeit als der verdickte Mittelabschnitt des Bandes hat, und daß zwischen jedem der verdünnten Abschnitte und dem verdickten Mittelabschnitt jeweils ein abgestufter Schulterabschnitt (6c) ausgebildet ist, wobei die Unterseite der Kernschicht eben ist.

2. Förderband nach Anspruch 1, welches weiterhin ein Paar von einer Dehnung widerstehenden, verstärkenden Schichten (7) aufweist, von denen jede längs des jeweiligen Endrandes der Kernschicht angeordnet ist.

## Revendications

1. Courroie flexible de transporteur destinée à être enroulée par des rouleaux de pincement pour présenter une section en forme de cylindre, comprenant une couche de couverture supérieure (4), une couche de couverture inférieure (5), et une couche de noyau de renforcement noyée entre les couches de couverture supérieure et inférieure, courroie caractérisée en ce que la couche de noyau de renforcement (6), présente une partie centrale plus épaisse (6b) et des parties respectivement plus minces de chaque côté de la partie centrale plus épaisse (6b), ces parties plus minces s'étendant sur la bord de la courroie de façon que chaque côté de la courroie présente une raideur de résistance à la courbure plus faible que celle de la partie centrale plus épaisse de cette courroie, et de façon qu'une partie d'épaulement étagée respective (6c) soit formée entre chacune des parties plus minces et la partie centrale plus épaisse, la surface inférieure de la couche de noyau étant plate.

2. Courroie de transporteur selon la revendication 1, caractérisée en ce qu'elle comprend, en outre, une paire de couches de renforcement résistant à l'allongement (7), situées chacune le long du bord d'extrémité correspondant de la couche de noyau.

*Fig. 1*

*Fig. 2*